Europäisches Patentamt

(19) European Patent Office

Office européen des brevets

(11) Numéro de publication : **0 313 464 B1**

(12) **FASCICULE DE BREVET EUROPEEN**

(45) Date de publication du fascicule du brevet :
03.04.91 Bulletin 91/14

(51) Int. Cl.⁵ : **F02K 1/82**

(21) Numéro de dépôt : 88402642.8

(22) Date de dépôt : 20.10.88

(54) Canal de transition d'un ensemble d'éjection de turboréacteur.

(30) Priorité : 21.10.87 FR 8714517

(43) Date de publication de la demande :
26.04.89 Bulletin 89/17

(45) Mention de la délivrance du brevet :
03.04.91 Bulletin 91/14

(84) Etats contractants désignés :
DE FR GB IT

(56) Documents cités :
FR-A- 1 102 811
FR-A- 2 249 769
FR-A- 2 445 895
US-A- 2 544 538
US-A- 3 053 283

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Gastebois, Philippe Marc Denis**
**37, rue du Ruisseau**
**F-77240 Vert Saint Denis (FR)**
Inventeur : **Jourdain, Gérard Ernest André**
**4, Résidence l'Arcadie Saintry sur Seine**
**F-91100 Corbeil Essonnes (FR)**
Inventeur : **Loubet, Marc Georges**
**87-3, Chemin des Acacias**
**F-77176 Nandy Cidex 510 (FR)**

(74) Mandataire : **Moinat, François et al**
**S.N.E.C.M.A. Service des Brevets Boîte Postale 81**
**F-91003 Evry Cédex (FR)**

## Description

La présente invention concerne un canal de transition placé dans un ensemble d'éjection de turboréacteur entre un canal de post-combustion et une tuyère de propulsion.

Dans un turboréacteur, le canal de post-combustion où circulent les gaz destinés à l'éjection présente habituellement une section de forme générale circulaire. Les recherches tendant à l'amélioration des performances, à la simplification et à divers objectifs en fonction des applications tels que la réduction des encombrements ou une optimisation cinématique ont amené dans certains cas à définir des tuyères de propulsion du type dit "bidimensionnelle" dont la structure fixe présente une section carrée ou rectangulaire.

FR-A-2 608 680 décrit par exemple une tuyère d'éjection réglable bidimensionnelle de ce type.

FR-A-2 326 585 concerne également un ensemble d'éjection à tuyère bidimensionnelle. Le canal de transition envisagé ne constitue toutefois pas une solution satisfaisante pour certaines applications et en particulier, la définition proposée pose de nombreuses difficultés pour l'utilisation de matériaux composites qui présentent par ailleurs des caractéristiques d'emploi avantageuses aux hautes températures rencontrées. En particulier, dans les solutions connues, en fonction des sollicitations mécaniques qui se développent en fonctionnement, des dilatations d'origine thermique s'exerçant de manière différentielle sur divers éléments et des déformations, et sous l'effet de la pression des gaz, le canal de transition est soumis à des moments de flexion. Le but de l'invention est de réduire les sollicitations mécaniques à des efforts de traction ou de compression simple, de réduire les contraintes mécaniques d'origine thermique, d'obtenir une répartition optimale des épaisseurs permettant d'obtenir une réduction de masse et de permettre un choix différencié de matériaux notamment du type composites, en les utilisant dans les meilleures conditions de leur tenue en service en fonction du type de sollicitation mécanique, notamment par traction ou par compression suivant le cas.

Ces buts sont atteints au moyen d'un canal de transition d'un ensemble d'éjection de turboréacteur du type précité caractérisé en ce que une enveloppe interne présente une forme de trémie, ou de pyramide tronquée évasée dans la direction amont, dont le bord amont a une section circulaire et le bord aval a une section quadrangulaire à angles arrondis, l'enveloppe externe présente également une forme de pyramide tronquée évasée dans la direction aval, dont le bord amont a une section circulaire et que l'enveloppe interne et l'enveloppe externe sont reliées par une multiplicité d'éléments, régulièrement répartis périphériquement, de hauteur croissante d'amont en aval en s'inscrivant dans l'intervalle ménagé entre les deux enveloppes suivant la direction de leurs génératrices, formant des raidisseurs.

Plusieurs modes avantageux de réalisation de ces raidisseurs sont également indiqués.

D'autres caractéristiques et avantages de l'invention seront mieux compris à la lecture qui va suivre d'un mode de réalisation de l'invention et de quelques variantes préférées, en référence aux dessins annexés sur lesquels :

– la figure 1 représente un canal de transition conforme à l'invention selon une vue schématique en coupe longitudinale par un plan passant par l'axe X-X de rotation du turboréacteur ;

– la figure 2 représente le canal de transition représenté à la figure I selon une vue schématique en coupe transversale selon une ligne II-II de la figure 1 ;

– la figure 2a montre selon un détail I de la figure 2, une variante de réalisation ;

– la figure 3 montre une vue partielle en perspective d'une portion du canal de transition représenté aux figures 1 et 2 montrant un mode de disposition des raidisseurs ;

– la figure 4 montre une vue partielle en perspective d'une portion du canal de transition, analogue à la représentation de la figure 3, montrant une variante du mode de disposition des raidisseurs;

– la figure 5 montre une vue partielle en perspective d'une portion du canal de transition, analogue aux représentations des figures 3 et 4, montrant une autre variante du mode de disposition des raidisseurs ;

– la figure 6 montre une vue partielle en perspective d'une portion du canal de transition, analogue aux représentations des figures 3 à 5, montrant une autre variante du mode de disposition des raidisseurs ;

– la figure 7 montre une vue partielle en perspective d'une portion du canal de transition, analogue aux représentations des figures 3 à 6, montrant une autre variation du mode de réalisation des raidisseurs.

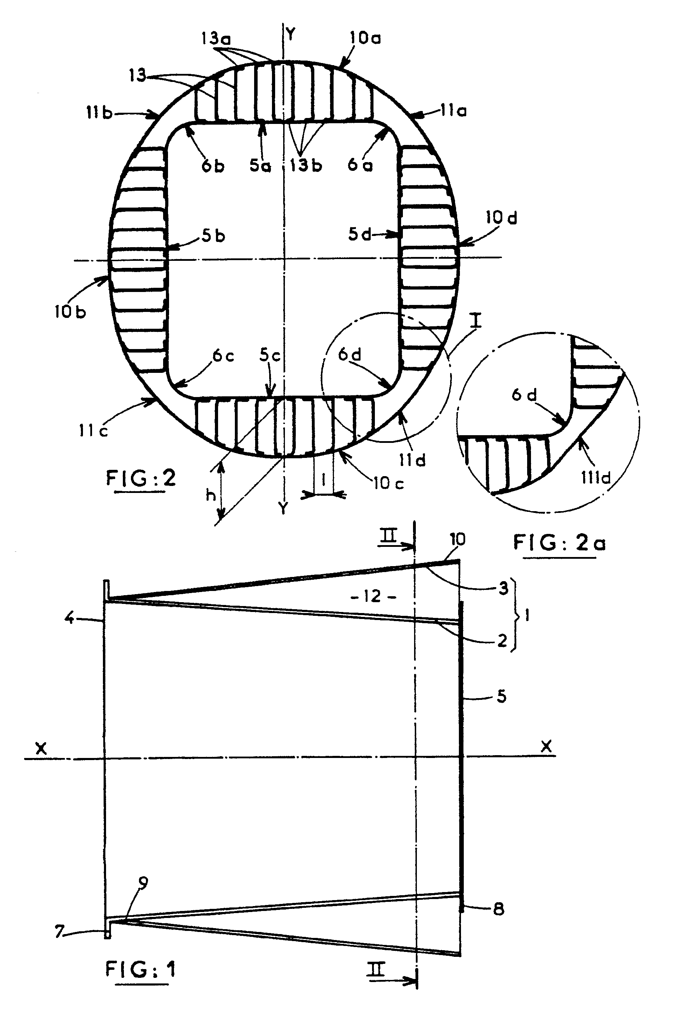

Un canal de transition 1 représenté aux figures 1 et 2 entre dans un ensemble d'éjection de turboréacteur de tout type connu et non représenté aux dessins et se trouve placé entre, côté amont, un canal de post-combustion, et, côté aval, une tuyère de propulsion de type bidimensionnelle et dont la bride fixe amont de liaison présente une forme générale quadrangulaire, carrée ou rectangulaire, amont et aval étant définis par rapport au sens normal de circulation des gaz dans la veine principale du turboréacteur. Le canal de transition 1 est constitué d'une enveloppe interne 2 et d'une enveloppe externe 3. L'enveloppe interne 2 présente en coupe longitudinale représentée à la figure 1 une forme de trémie ou de pyramide tronquée dont la base 4 est située du côté amont et présente une section circulaire. Le bord aval 5 de l'enveloppe interne 2 présente une section quadrangulaire dont les quatre côtés 5a, 5b, 5c et 5d sont réunis par des angles arrondis 6a, 6b, 6c et 6d, comme représenté à la figure 2. L'enveloppe interne 2 porte côté amont une bride circulaire 7 pour la fixation sur le canal amont de post-combustion du turboréacteur. L'enveloppe interne 2 porte également côté aval une bride de forme périphérique quadrangulaire 8 pour la fixation de la tuyère bidimensionnelle du turboréacteur. Le bord amont 9 de l'enveloppe externe 3 présente une section circulaire et se raccorde au bord de l'enveloppe interne 2 au niveau de la bride circulaire amont 7. L'enveloppe externe 3 présente également en coupe longitudinale représentée à la figure 1 une forme de pyramide tronquée évasée vers l'aval. La section aval 10 de l'enveloppe externe 3 présente, comme représenté à la figure 2, quatre segments 10a, 10b, 10c, 10d, respectivement disposés face aux quatre côtés 5a, 5b, 5c 5d de la section aval 5 de l'enveloppe interne 1. Les quatre segments 10a, 10b, 10c, 10d présentent respectivement chacun une forme générale parabolique et sont réunis entre eux par des arcs de cercle 11a, 11b, 11c, 11d, respectivement disposés face aux quatre coins arrondis 6a, 6b, 6c, 6d de l'enveloppe interne 1. En variante, comme représenté schématiquement à la figure 2a, la liaison entre les segments paraboliques 10a, 10b, 10c, 10d peut être obtenue à l'aide de segments de droite tels que 111d. Dans l'intervalle 12 ainsi ménagé entre l'enveloppe interne 2 et l'enveloppe externe 3 et reliant les deux dites enveloppes 2 et 3, des raidisseurs 13, de forme générale triangulaire dont la pointe est située du côté amont vers la bride circulaire 7, sont disposés, régulièrement répartis sur la périphérie, notamment entre les angles arrondis 6a, 6b, 6c, 6d, comme représenté à la figure 2. Chaque raidisseur 13 présente un bord tombé supérieur 13a coopérant avec l'enveloppe externe 3 et un bord tombé inférieur 13b coopérant avec l'enveloppe interne 2.

La paroi interne du canal de transition 1 qui vient d'être décrit est notamment soumise à une pression différentielle $\Delta$ p qui atteint par exemple dans certaines applications 0,3 MPa. En fonction de la hauteur maximale h de raidisseur 13 obtenue sur le plan de symétrie XY de l'intervalle 12 passant par l'axe XX de rotation du turboréacteur, de l'épaisseur de parois choisie pour les raidisseurs, on détermine un pas 1 d'écart entre deux raidisseurs 13 voisins, d'où se déduit l'épaisseur de paroi de l'enveloppe interne 2, en fonction des matériaux choisis. Il résulte de la structure ainsi obtenue du canal de transition qui vient d'être décrit que l'enveloppe externe 3 n'est soumise qu'à des sollicitations mécaniques de traction alors que les raidisseurs 13 ou l'enveloppe interne 2 sont soumis à des efforts de compression. Un matériau composite du type céramique présentant de bonnes caractéristiques à chaud, au contact des gaz chauds de la veine principale circulant dans le canal de transition 1, et donnant de bons résultats de résistance aux efforts de compression est ainsi adapté pour l'enveloppe interne 2, tandis qu'un matériau composite du type à base de carbone ou de verre présentant de bonnes caractéristiques en traction et soumis à des températures plus basses est adapté pour l'enveloppe externe 3. Les matériaux des différents éléments, y compris des raidisseurs 13, sont également choisis de manière à éviter l'apparition de contraintes d'origine thermique dues à des différences des coefficients de dilatation thermique.

Tenant compte de ces différents objectifs et des variations des conditions d'utilisation en fonction des applications particulières, plusieurs modes de réalisation peuvent être envisagés pour la forme ou la disposition des raidisseurs 13, qui sont avantageux selon le cas considéré.

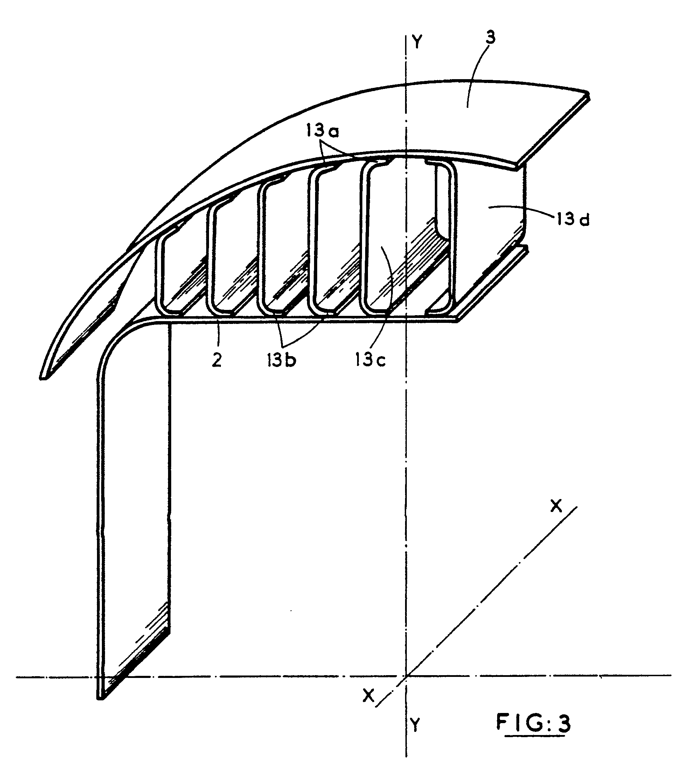

La figure 3 montre ainsi un détail de la réalisation déjà représenté à la figure 2. Les bords tombés 13a et 13b des raidisseurs 13 sont tournés vers le plan de symétrie XY de l'intervalle 12. Les raidisseurs centraux voisins 13c et 13d sont séparés de part et d'autre dudit plan de symétrie XY.

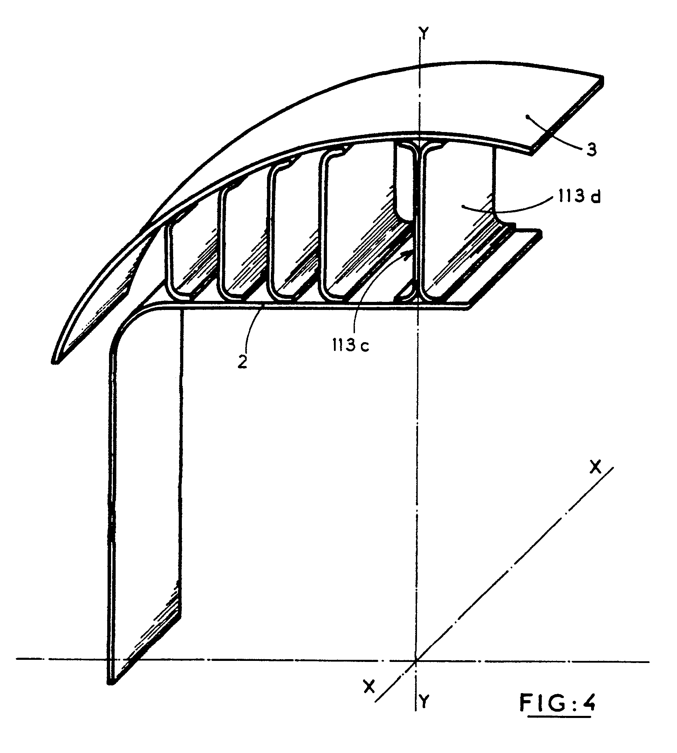

Selon la variante de réalisation représentée à la figure 4, la disposition reste similaire à celle de la figure 3, mais les raidisseurs centraux voisins 113c et 113d sont respectivement retournés et accolés dos à dos sur le plan de symétrie XY.

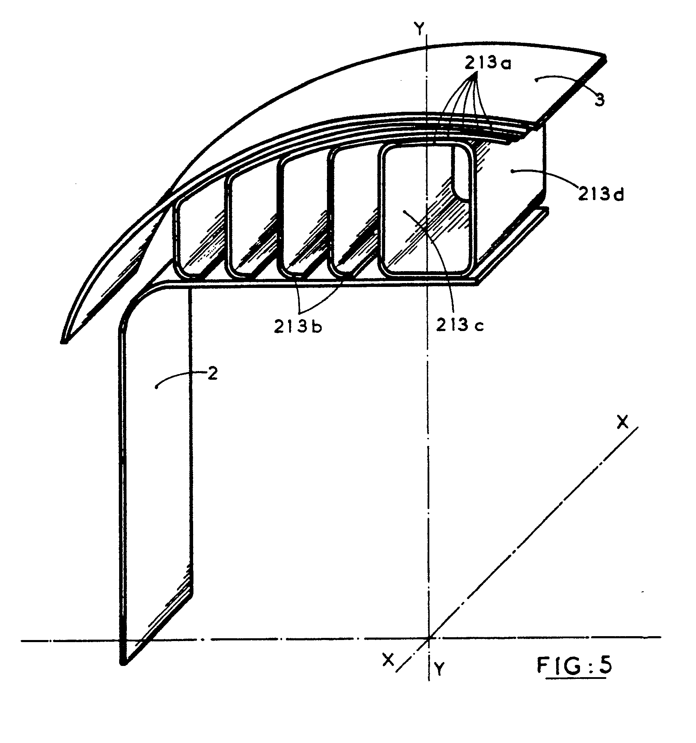

Selon la variante de réalisation représentée à la figure 5, un raidisseur 213 comporte deux parois 213c et 213d longitudinales le long de l'intervalle 12 qui sont respectivement symétriques par rapport au plan de symétrie XY dudit intervalle 12 et ces deux parois 213c et 213d sont réunies par une troisième paroi 213a qui leur est perpendiculaire à leur bord radialement supérieur, un bord tombé 213b étant à nouveau prévu et coopérant avec l'enveloppe interne 2. Les bords tombés inférieurs 213b du raidisseur central se rejoignent pour donner à ce raidisseur central une forme de poutre creuse à section quadrangulaire. Les parois supérieures 213a respectives des raidisseurs 213 sont dans ce cas superposées radialement de l'intérieur vers l'extérieur, en partant du raidisseur central.

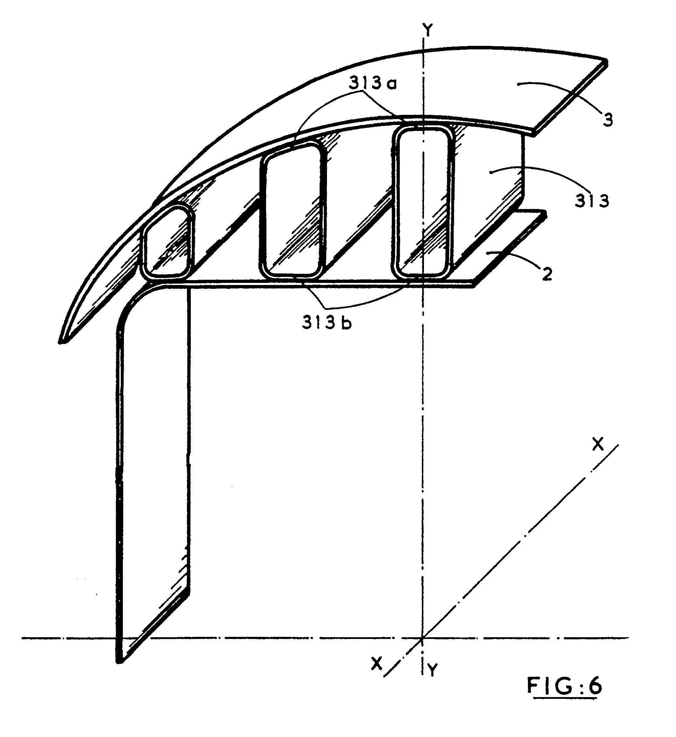

Dans la variante de réalisation représentée à la figure 6, les raidisseurs 313 ont la forme de poutres creuses, de forme générale quadrangulaire en section, la face supérieure 313a du raidisseur coopérant avec l'enveloppe externe 3 et la face inférieure 313b du raidisseur coopérant avec l'enveloppe interne 2.

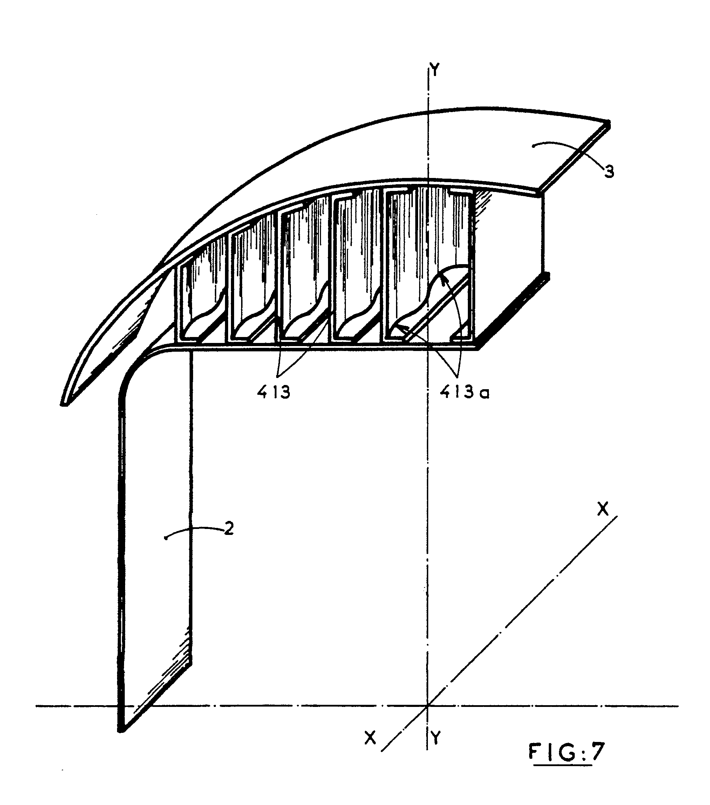

La variante de réalisation représentée à la figure 7 utilise des raidisseurs 313 disposés de manière similaire aux raidisseurs 13 de la variante représentée aux figures 2 et 3 mais la face des raidisseurs au lieu d'être plane présente des ondulations 413a.

## Revendications

1. Canal de transition d'un ensemble d'éjection de turboréacteur, placé entre un canal de post-combustion en amont et une tuyère de propulsion du type bidimensionnelle en aval, constitué de deux enveloppes (2, 3), l'enveloppe interne (2) délimitant la veine intérieure de circulation des gaz et caractérisé en ce que l'enveloppe interne (2) présente une forme de trémie, ou de pyramide tronquée évasée dans la direction amont, dont la base (4) côté amont a une section circulaire et le bord aval (5) a une section quadrangulaire à angles arrondis, l'enveloppe externe (3) présente également une forme de pyramide tronquée évasée dans la direction aval, dont le bord amont (9) a une section circulaire et que l'enveloppe interne (2) et l'enveloppe externe (3) sont reliées par une multiplicité d'éléments (13 ; 113 ; 213 ; 313 ; 413), régulièrement répartis périphériquement, de hauteur croissante d'amont en aval en s'inscrivant dans l'intervalle (12) entre les deux enveloppes (2, 3) suivant la direction de leurs génératrices, formant des raidisseurs.

2. Canal de transition d'un ensemble d'éjection de turboréacteur selon la revendication 1 comportant en outre à l'extrémité amont de l'enveloppe interne (2), une bride circulaire (7) de fixation sur le canal de post-combustion et, à l'extrémité aval de ladite enveloppe interne (2), une bride (8) de forme périphérique quadrangulaire de fixation de la tuyère bidimensionnelle.

3. Canal de transition d'un ensemble d'éjection de turboréacteur selon l'une des revendications 1 ou 2 dans lequel la section d'extrémité aval (10) de l'enveloppe externe (3) est constituée de quatre segments (10a, 10b, 10c, 10d) de forme générale parabolique, respectivement disposés face aux quatre côtés (5a, 5b, 5c, 5d) de quadrilatère constituant la section d'extrémité aval (5) de l'enveloppe interne (2) et reliés entre eux face aux angles arrondis (6a, 6b, 6c, 6d) de ladite section d'extémité aval (5) de l'enveloppe interne (2).

4. canal de transition d'un ensemble d'éjection de turboréacteur selon la revendication 3 dans lequel lesdits sergents paraboliques (10a, 10b, 10c, 10d) sont réunis par des arcs de cercle (11a, 11b, 11c, 11d).

5. Canal de transition d'un ensemble d'éjection de turboréacteur selon la revendication 3 dans lequel lesdits segments paraboliques (10a, 10b, 10c, 10d) sont réunis par des segments de droite (111d).

6. Canal de transition d'un ensemble d'éjection de turboréacteur selon l'une quelconque des revendications 1 à 5 dans lequel la section transversale des raidisseurs (13) présente à chaque extrémité un bord tombé (13a, 13b) respectivement solidarisé à la surface coopérante d'enveloppe (2, 3).

7. Canal de transition d'un ensemble d'éjection de turboréacteur selon la revendication 6 dans lequel dans chaque intervalle compris entre deux angles arrondis, les bords tombés (13a, 13b) sont orientés de manière à ce que les raidisseurs, respectivement symétriques deux à deux par rapport au plan de symétrie XY de l'intervalle, présentent leur côté ouvert tourné vers ledit plan de symétrie et les deux raidisseurs voisins centraux (13c, 13d), placés de part et d'autre dudit plan de symétrie, ne sont pas en contact l'un avec l'autre.

8. Canal de transition d'un ensemble d'éjection de turbo- réacteur selon la revendication 6 dans lequel dans chaque intervalle compris entre deux angles arrondis, deux raidisseurs centraux (113c, 113d) sont disposés accolés dos à dos suivant le plan de symétrie XY de l'intervalle, les bords tombés des autres raidisseurs situés dans chaque moitié d'intervalle sont respectivement orientés en sens inverse des bords tombés dudit raidisseur central correspondant.

9. Canal de transition d'un ensemble d'éjection de turboréacteur selon la revendication 6 dans lequel les raidisseurs (213c, 213d) respectivement symétriques par rapport au plan de symétrie XY de l'intervalle sont réunis deux à deux par une paroi supérieure (213a), lesdites parois supérieures (213a) se superposant radialement de l'intérieur vers l'extérieur en partant des deux raidisseurs centraux dont les bords tombés inférieurs (213b) sont également réunis, les bords tombés inférieurs des autres raidisseurs étant orientés également vers ledit plan de symétrie de l'intervalle.

10. Canal de transition d'un ensemble d'éjection de turboréacteur selon la revendication 6 dans lequel les raidisseurs (313) ont la forme de poutres creuses, de forme générale quadrangulaire en section, les faces respectivement supérieure (313a) et inférieure (313b) de chaque raidisseur (313) coopérant respectivement avec les enveloppes externe (3) et interne (2).

11. Canal de transition d'un ensemble d'éjection de turboréacteur selon la revendication 7 dans lequel chaque raidisseur (413) en section par un plan perpendiculaire audit plan de symétrie de l'intervalle présente une forme ondulée.

## Ansprüche

1. Übergangskanal für die Ausstoßeinheit eines Turbostrahltriebwerks, der zwischen dem stromaufwärts gelegenen Nachverbrennungskanal und einer stromabwärts gelegenen zweidimensionalen Schubdüse angeordnet ist und aus zwei Mänteln (2, 3) besteht, wobei der innere Mantel (2) den inneren Gaszirkulationsstrom begrenzt, dadurch gekennzeichnet, daß der innere Mantel (2) die Form eines sich in stromaufwärtiger Richtung erweiternden Trichterkonus oder Pyramidenstumpfs hat, dessen stromaufwärtige Basis runden Querschnitt hat und dessen stromabwärtiger Rand (5) viereckigen Querschnitt hat,

daß der äußere Mantel (3) ebenfalls die Form eines Pyramidenstumpfs hat, der sich in stromabwärtiger Richtung erweitert und dessen stromaufwärtiger Rand (9) runden Querschnitt hat,

und daß der innere Mantel (2) und der äußere Mantel (3) durch mehrere gleichmäßig über der Umfang verteilte Elemente (13, 113 ; 213 ; 313 ; 413) mit von der stromaufwärtigen Seite zur stromabwärtigen Seite wachsender Höhe miteinander verbunden sind, die sich in den Zwischenraum (12) zwischen den beiden Mänteln (2, 3) in Richtung ihrer Erzeugenden einfügen und Versteifungsrippen bilden.

2. Übergangskanal für die Ausstoßeinheit eines Turbostrahltriebwerks nach Anspruch 1, mit einem an dem stromabwärtigen Ende des inneren Mantels (2) angeordneten runden Flansch (7) zur Befestigung an dem Nachverbrennungs-Kanal sowie mit einem an dem stromabwärtigen Ende des inneren Mantels (2) angeordneten Flansch (8) mit viereckigem Querschnitt zur Befestigung der zweidimensionalen Düse.

3. Übergangskanal für die Ausstoßeinheit eines Turbostrahltriebwerks nach einem der Ansprüche 1 oder 2, bei dem der Querschnitt des stromabwärtigen Endes (10) des äußeren Mantels (3) aus vier Segmenten (10a, 10b, 10c, 10d) von allgemein parabolischer Form besteht, die jeweils einer der vier Seiten (5a, 5b, 5c bzw. 5d) des den stromabwärtigen Endquerschnitt (5) des das Ende des inneren Mantels (2) bildenden Vierecks gegenüberliegen und im Bereich der abgerundeten Ecken (6a, 6b, 6c, 6d) des stromabwärtigen Endquerschnitts (5) des inneren Mantels (2) miteinander verbunden sind.

4. Übergangskanal für die Ausstoßeinheit eines Turbostrahltriebwerks nach Anspruch 3, bei dem die parabolischen Segmente (10a, 10b, 10c, 10d) durch Kreisbogenstücke (11a, 11b, 11c, 11d) miteinander verbunden sind.

5. Übergangskanal für die Ausstoßeinheit eines Turbostrahltriebwerks nach Anspruch 3, bei dem die parabolischen Segmente (10a, 10b, 10c, 10d) durch Geradenabschnitte (111d) miteinander verbunden sind.

6. Übergangskanal für die Ausstoßeinheit eines Turbostrahltriebwerks nach einem der Ansprüche 1 bis 5, bei dem der Querschnitt der Versteifungsrippen (13) an jedem Ende einen abgebogenen Rand (13a, 13b) aufweist, der mit der zugehörigen Fläche des jeweiligen Mantels (2, 3) fest verbunden ist.

7. Übergangskanal für die Ausstoßeinheit eines Turbostrahltriebwerks nach Anspruch 6, bei dem die abgebogenen Ränder (13a, 13b) innerhalb jedes Zwischenraums zwischen zwei der abgerundeten Ecken so orientiert sind, daß die jeweils paarweise symmetrisch zur Symmetrieebene (XY) des Zwischenraums liegenden Versteifungsrippen mit ihren offenen Seiten zu der Symmetrieebene weisen, wobei die einander benachbarten Versteifungsrippen, die auf beiden Seiten der Symmetrieebene liegen, einander nicht berühren.

8. Übergangskanal für die Ausstoßeinheit eines Turbostrahltriebwerks nach Anspruch 6, bei dem in jedem zwischen zwei der abgerundeten Ecken liegenden Zwischenraum zwei zentrale Versteifungsrippen (13c, 13d) längs der Symmetrieebene Rücken an Rücken miteinander verbunden sind, wobei die abgebogenen Ränder der übrigen Versteifungsrippen in jeder Hälfte des Zwischenraums jeweils in die Richtung weisen, die der Richtung der abgebogenen Rändern der zentralen Versteifungsrippen entgegengesetzt ist.

9. Übergangskanal für die Ausstoßeinheit eines Turbostrahltriebwerks nach Anspruch 6, bei dem die zur Symmetrieebene (XY) des Zwischenraums jeweils symmetrischen Versteifungsrippen (213c, 213d) paarweise durch eine obere Wandung (213a) miteinander verbunden sind und diese oberen Wandungen (213a), ausgehend von den beiden zentralen Versteifungsrippen, deren abgebogene untere Ränder ebenfalls miteinander vereinigt sind, radial von innen nach außen übereinander liegen und die unteren abgebogenen Ränder der anderen Versteifungsrippen ebenfalls in Richtung auf die Symmetrieebene des Zwischenraums orientiert sind.

10. Übergangskanal für die Ausstoßeinheit eines Turbostrahltriebwerks nach Anspruch 6, bei dem die Versteifungsrippen (313) die Form von Hohlträgern mit im wesentlichen viereckigem Querschnitt haben, wobei die Ober- bzw. Unterseiten (313a bzw. 313b) jeder Versteifungsrippe (313) mit dem äußeren (3) bzw. dem inneren Mantel (2) zusammenwirken.

11. Übergangskanal für die Ausstoßeinheit eines Turbostrahltriebwerks nach Anspruch 7, bei dem jede Versteifungsrippe (413) in einem senkrecht zu der Symmetrieebene des Zwischenraums ausgeführten Schnitt wellenförmiges Profil hat.

**Claims**

1. Transitional duct for a turbojet engine tail pipe assembly, placed between an afterburner duct upstream and a tail pipe of the bidimensional type downstream, made up of two shells (2, 3), the inner shell (2) delimiting the inner gas stream and characterised in that the inner shell (2) presents the shape of a hopper, or truncated pyramid, flared in the upstream direction, of which the base (4) on the upstream side has circular cross section and the downstream lip (5) has a quadrangular cross section with rounded corners, the outer shell (3) also presents the shape of a truncated pyramid flared in the downstream direction, of which the upstream lip (9) is of circular cross section and in that the inner shell (2) and the outer shell (3) are interconnected by a multiplicity of elements (13 ; 113 ; 213 ; 313, 413), evenly distributed around the periphery and of increasing height from upstream to downstream and inscribed within the space (12) between the two shells (2, 3) in accordance with the direction of their generatrixes, forming stiffeners.

2. Transitional duct for a turbojet engine tail pipe assembly in accordance with Claim 1 comprising in addition, at the upstream end of the inner shell (2), an annular flange (7) for attaching it to the afterburner duct and, at the downstream end of the said inner shell (2), a flange (8) in the shape of a quadrangular annulus for attachment to the bidimensional tail pipe.

3. Transitional duct for a turbojet engine tail pipe assembly in accordance with either of Claims 1 or 2 in which the cross section of the downstream end (10) of the outer shell (3) is made up of four segments (10a, 10b, 10c, 10d) of a generally parabolic shape, respectively placed to face the four sides (5a, 5b, 5c, 5d) of the quadrilateral constituting the downstream end (5) of the inner shell (2) and interconnected to face the rounded corners (6a, 6b, 6c, 6d) of the said downstream end (5) of the inner shell (2).

4. Transitional duct for a turbojet engine tail pipe assembly in accordance with Claim 3 in which the said parabolic segments (10a, 10b, 10c, 10d) are interconnected by the arcs of circles (11a, 11b, 11c, 11d).

5. Transitional duct for a turbojet engine tail pipe assembly in accordance with Claim 3 in which the said parabolic segments (10a, 10b, 10c, 10d) are interconnected by straight segments (111d).

6. Transitional duct for a turbojet engine tail pipe assembly in accordance with any of Claims 1 to 5 in which the transverse cross section of the stiffeners (13) presents at each end a return (13a, 13b) attached respectively to the matching area of the shells (2, 3).

7. Transitional duct for a turbojet engine tail pipe assembly in accordance with Claim 6 in which in each space between two rounded corners, the returns (13a, 13b) are orientated in such a way that the stiffeners, respectively symmetrical, two by two in relation to the plane of symmetry XY of the space, present their open side turned towards the plane of symmetry and the two adjoining central stiffeners (13c, 13d), placed on either side of the said plane of symmetry, are not in contact with one another.

8. Transitional duct for a turbojet engine tail pipe assembly in accordance with Claim 6 in which in each space between two rounded corners, two central stiffeners (113c, 113d) are placed back to back at the plane of symmetry XY of the space, the returns of the other stiffeners situated in each half of the space are respectively orientated in the opposite directions to the return of the said corresponding central stiffener.

9. Transitional duct for a turbojet engine tail pipe assembly in accordance with Claim 6 in which the stiffeners (213c, 213d) respectively symmetrical in relation to the plane of symmetry XY of the space are joined together in twos by by an upper wall (213a), the said upper walls (213a) being superimposed radially from the inside to the outside, starting with the two central stiffeners whose lower returns (213b) are also joined, the lower returns of the other stiffeners also being orientated towards the plane of symmetry of the space.

10. Transitional duct for a turbojet engine tail pipe assembly in accordance with Claim 6 in which the stiffeners (313) take the form of a hollow chamber, generally quadrangular in cross section, the faces respectively upper (313a) and lower (313b) of each stiffener being joined respectively to the outer (3) and inner (2) shells.

11. Transitional duct for a turbojet engine tail pipe assembly in accordance with Claim 7 in which each stiffener (413) has a shape in section that is sinusoidal in relation to a plane perpendicular to the said plane of symmetry of the space.

FIG: 2

FIG: 2a

FIG: 1

FIG: 3

FIG:4

FIG : 5

EP 0 313 464 B1

FIG:6

11

FIG:7